## Europäisches Patentamt

## European Patent Office

## Office européen des brevets

(11) Veröffentlichungsnummer: **0 072 388**
**B1**

# (12) EUROPÄISCHE PATENTSCHRIFT

(45) Veröffentlichungstag der Patentschrift:
02.10.85

(21) Anmeldenummer: 82101123.6

(22) Anmeldetag: 16.02.82

(51) Int. Cl.⁴: **C 02 F 1/58**, C 02 F 1/28,
B 01 D 15/00, B 01 J 20/12,
B 01 D 23/10

(54) Verfahren zur Entfernung bzw. Teilentfernung von in einem ein Gefälle aufweisenden Fliessgewässer enthaltenen störenden Inhaltsstoffen und Vorrichtung zur Durchführung des Verfahrens.

(30) Priorität: 26.05.81 DE 3120891

(43) Veröffentlichungstag der Anmeldung:
23.02.83 Patentblatt 83/8

(45) Bekanntmachung des Hinweises auf die Patenterteilung:
02.10.85 Patentblatt 85/40

(84) Benannte Vertragsstaaten:
AT CH FR LI SE

(56) Entgegenhaltungen:
EP - A - 0 007 098
EP - A - 0 046 276
DE - A - 1 584 899
DE - A - 2 243 412
DE - A - 2 461 663
DE - A - 2 901 081
DE - B - 297 587

(73) Patentinhaber: **Kernforschungszentrum Karlsruhe GmbH, Weberstrasse 5, D-7500 Karlsruhe 1 (DE)**
Patentinhaber: **Wahnbachtalsperrenverband, Kronprinzenstrasse 13, D-5200 Siegburg (DE)**

(72) Erfinder: **Berhardt, Heinz, Prof. Dr., Siegelsknippen, D-5200 Siegburg (DE)**
Erfinder: **Eberle, Siegfried, Prof. Dr., Luisenstrasse 43, D-7514 Eggenstein-Leopoldshafen (DE)**
Erfinder: **Donnert, Dietfried, Dr., Boeckstrasse 20, D-7500 Karlsruhe (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren und eine Vorrichtung zur Entfernung bzw. Teilentfernung von in einem ein Gefälle aufweisenden Teichauslauf oder einem anderen natürlichen Fließgewässer enthaltenen störenden, gelösten Inhaltsstoffen.

Freifließende Gewässer, gleich welcher Herkunft, führen häufig Inhaltsstoffe der unterschiedlichsten Art in gelöster Form mit sich, die in nachfolgenden Gewässerabschnitten erhebliche Störungen verursachen. Solche Fließgewässer sind beispielsweise Abläufe aus kleineren Industrie- oder handwerklichen Betrieben, Siedlungs-Abläufe, Abläufe von Einzelgehöften, Fischteichausläufe etc. oder Zuläufe von Naturbadeseen. Unter störenden Inhaltsstoffen sollen beispielsweise gelöste Farbstoffe etc. oder Eutrophierungs-Prozesse auslösende bzw. in Gang haltende Stoffe, wie zum Beispiel Phosphor-Verbindungen, Ammoniumionen und/oder Aminostickstoff-Verbindungen etc., verstanden werden. Die Reinigung solcher natürlich fließender Gewässer oder auch die Reinigung von natürlichen Fließgewässern von solchen Störstoffen ist sehr schwierig. Es ist deshalb bisher auch keine Anlage zur Filtration bzw. Reinigung kleinerer Fließgewässer bekanntgeworden.

Zur Enteisenung eines Wassers bzw. zur Entfernung von gelöstem Eisen aus einem Wasser wurde eine aus Kies- oder Stein- oder Schlackensplitt oder Bimskies und Zement hergestellte Platte vorgeschlagen, die zwischen den durch die Zementmasse aneinandergekitteten Körnern und darüber gleichmäßig verteilte Hohlräume aufweist, in welchen das Eisen ausfällt und sich an der Oberfläche der Körner ansetzt, jedoch an ihr nicht haften bleibt (DE-C-297 587).

Der Erfindung liegt die Aufgabe zugrunde, ein Verfahren und eine Vorrichtung zu schaffen, mit welchem bzw. welcher gelöste, störende Inhaltsstoffe aus kleineren Fließgewässern zumindest soweit entfernt werden können, daß in nachfolgenden Gewässerabschnitten keine Störungen in bezug auf die Gewässergesundheit, Funktion oder Verwendbarkeit des Gewässers mehr auftreten. Insbesondere sollen Teichausläufe oder auch Teichreihen, Siedlungsabläufe oder Zuläufe von Naturbadeseen von Inhaltsstoffen, die in unterhalb dieser Fließgewässer gelegenen eutrophierungsgefährdeten Gewässern Eutrophierungs-Prozesse auslösen bzw. in Gang halten können, wie zum Beispiel Phosphor-Verbindungen, Ammoniumionen und/oder Aminostickstoff-Verbindungen, soweit befreit werden, daß solche Prozesse praktisch ausgeschlossen oder zumindest auf ein Minimum herabgesetzt werden. Zudem soll die Belastung des Sauerstoffhaushaltes unterhalb gelegener Gewässer (die mikrobielle Oxidation von zum Beispiel Ammoniumionen im Gewässer verbraucht Sauerstoff) weitgehend vermindert werden. Die Durchführbarkeit des Verfahrens und die Funktionsfähigkeit der Vorrichtung muß unter naturgegebenen Bedingungen über einen Jahreszyklus hinweg gewährleistet sein. Dies bedeutet, daß sowohl im Sommer bei Algenbewuchs im Oberflächenbereich des Gewässers als auch im Winter bei Vereisung der Wasseroberfläche das Verfahren durchführbar und die Vorrichtung funktionsfähig sein soll. Sowohl der apparative Aufwand als auch der Unterhaltungs- und Betriebs-Aufwand (auch der der erforderlichen Wartung) muß so gering sein, daß die erforderlichen Kosten auch von Institutionen getragen werden können, die keinen Gewinn machen. (Institutionen für öffentliche Gewässerschutzmaßnahmen.)

Die Aufgabe wird erfindungsgemäß dadurch gelöst, daß das Wasser ausschließlich unter Ausnutzung seines Gefälles ohne Zufuhr von Fremdenergie mindestens einmal über einen unterhalb der Gewässeroberfläche angeordneten Schüttkörper aus gekörntem, die störenden, gelösten Inhaltsstoffe zurückhaltendem Sorptionsmaterial geleitet wird. Insbesondere wird zum Verhindern bzw. Stoppen von Eutrophierungs-Prozessen in Teichanlagen oder in natürlichen Fließgewässern, die Eutrophierung verursachende Inhaltsstoffe mit sich führen, das Wasser ausschließlich unter Ausnutzung seines Gefälles ohne Zufuhr von Fremdenergie mindestens einmal über einen unterhalb der Gewässeroberfläche angeordneten Schüttkörper aus gekörntem, die Eutrophierung verursachenden Phosphor- und Stickstoffverbindungen aufnehmendem Sorptionsmaterial geleitet.

Eine vorteilhafte Ausführung des erfindungsgemäßen Verfahrens ist dadurch gekennzeichnet, daß das Fließgewässer mit einem Überstau von wenigstens 15 cm Wasserschichtdicke über der wirksamen Schüttkörper-Oberfläche auf diese geleitet wird, das Fließgewässer das Sorptionsmaterial durchströmt, wobei die störenden Inhaltsstoffe auf bzw. im Schüttkörper zurückbleiben, und das gereinigte Wasser unterhalb der Wasseroberfläche des Überstaus abgeleitet wird. Als Sorptionsmaterial wird Aktivtonerde mit einer geeigneten Korngröße im Bereich von 1 bis 3 mm verwendet. Es können aber auch andere Sorptionsmaterialien, wie z. B. $Al_2O_3$ oder Ionenaustauscher etc., zur Entfernung bzw. Teilentfernung von störenden Inhaltsstoffen Verwendung finden.

Je nach der Wasserführung des Fließgewässers wird dieses über mehrere nebeneinander liegende Schüttkörper geleitet. Schwankt die Konzentration der störenden Inhaltsstoffe des Fließgewässers und ist die Schwankungsbreite schwer oder gar nicht kontrollierbar, so wird das Fließgewässer kaskadenartig über mehrere Schüttkörper geleitet.

Die erfindungsgemäße Vorrichtung zur Durchführung des Verfahrens ist gekennzeichnet durch mindestens einen nach unten und seitlich begrenzten, einen Schüttkörper aus gekörntem, gelöste Stoffe aus der Gruppe Farbstoffe, Phosphor- und Stickstoffverbindungen zurückhaltendem Sorptionsmaterial enthaltenden Raum unterhalb der Wasseroberfläche eines Teichauslaufes oder eines anderen natürlichen Fließgewässers mit einem Zulauf für das von den störenden, gelösten Inhaltsstoffen zu reinigende Wasser der Teichanlage oder des natürlichen Fließgewässers oberhalb des Schüttkörpers, mit Mitteln für das Ableiten des den Schüttkörper durchströmten gereinigten Wassers unterhalb des Zulauf-Niveaus und mit Mitteln zum Rückspülen des mit den störenden Stoffen beladenen Sorptionsmaterials. Eine Ausbildung der erfindungsgemäßen Vorrichtung ist dadurch gekennzeichnet, daß der einen Schüttkörper enthaltende Raum aus einem Teil eines Teiches gebildet wird und die seitliche Abgrenzung aus einem Wall, aus einer Mauer oder aus einem Wehr besteht. In einer weiteren ebenfalls vorteilhaften Ausbildung der erfindungsgemäßen Vorrichtung wird der einen Schüttkörper enthaltende Raum aus dem Innenraum eines Behälters oder einer Wanne gebildet und besteht die Abgrenzung aus der Behälterwand oder aus der Wannenwand. Sowohl der Zulauf zum Schüttkörper als auch die Mittel für das Ableiten des gereinigten Wassers sind frei von Fremdenergie-Zuleitungen ausgebildet. Die Schüttkörper sind wenigstens 15 cm unterhalb der Wasseroberfläche im Zulauf angeordnet. Hierdurch ist gewährleistet, daß die Schüttkörper oder Filter weder durch Eisbedeckkung während des Winterzeitraums, noch durch übermäßige Algen- und Pflanzen-Entwicklung oder erhöhtes Bakterienaufkommen im Sommer vorzeitig verstopfen oder in ihrer eigentlichen Aufbereitungsleistung begrenzt werden.

Die Mittel für das Ableiten des gereinigten Wassers bestehen jeweils im wesentlichen aus einem gegen die Sorptionsmittel-Teilchen undurchlässigen, lediglich für das gereinigte Wasser durchlässigen Sammelraum bzw. einer anderen geeigneten Ableitevorrichtung unterhalb des Schüttkörpers oder seitlich des unteren Teiles des Schüttkörpers angeordnet, und einer Rohrleitung mit einem in seiner Höhe verstellbaren Auslauf. Diese Vorrichtung muß so beschaffen sein, daß sie beim Rückspülen mit unfiltriertem Wasser nicht verstopft und andererseits geeignet ist, das Filterspülwasser aus dem Filtermaterial ohne übermäßige Erhöhung des Druckverlustes abzuziehen. Dies kann z. B. durch ein geschlitztes Filterrohr oder durch einen mit einem geeigneten feinmaschigen Sieb bedeckten Filterboden realisiert werden. Die das gereinigte Wasser ableitende Rohrleitung ist durch eine das Fließgewässer stauende Befestigung oder durch einen den den Schüttkörper enthaltenden Raum nach außen begrenzenden Wall geführt. In einer anderen Ausbildung der erfindungsgemäßen Vorrichtung ist die Rohrleitung vom Filterelement aus zunächst an der Behälterwand oder Wannenwand nach oben und danach abbiegend durch die Befestigung oder durch den Wall geführt. Durch die Art der Ausbildung der Vorrichtung wird ermöglicht, daß die Schüttkörper auf einfache Art und Weise gereinigt werden können, zum Beispiel durch Rückspülen mit dem zur Verfügung stehenden Wasser, durch Abtragen geringer Oberflächenschichten des Schüttkörpers oder durch gelegentliches Auflockern des Sorptionsmaterials.

In einer Weiterbildung der erfindungsgemäßen Vorrichtung ist der Auslauf der Rohrleitung als um die Achse der Rohrleitung schwenkbarer Schwanenhals ausgebildet. Dies bringt den Vorteil mit sich, daß die Ableitung des gereinigten Wassers leicht und auf einfache Weise reguliert werden kann.

Eine vorteilhafte Weiterbildung der erfindungsgemäßen Vorrichtung ist gekennzeichnet durch mehrere parallel geschaltete, oder durch mehrere hintereinander und in absteigender Reihe geschaltete, nach unten und seitlich begrenzte, Schüttkörper enthaltende Räume. Durch Erhöhung der Anzahl der Schüttkörper-Aggregate nach dem Baukastenprinzip kann die Vorrichtung jederzeit erforderlich werdenden Durchsatzveränderungen angepaßt werden. Durch den geringen erforderlichen Wartungsaufwand und dadurch, daß keine Fremdenergie für die Reinigung erforderlich ist, kann die Vorrichtung auch an schwer zugänglichen Stellen installiert werden und zufriedenstellend arbeiten.

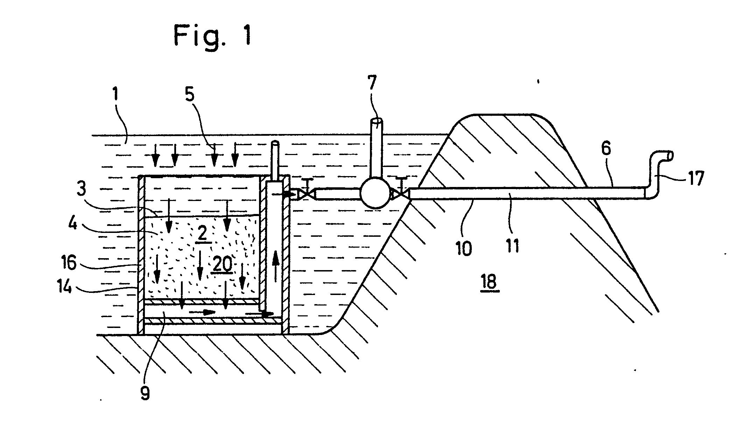

Im folgenden wird die Erfindung anhand eines Ausführungsbeispiels und der Zeichnungen näher erläutert. Die Erfindung ist jedoch auf das Beispiel oder die Figuren 1 bis 3 nicht beschränkt.

### Beispiel

An den mit Hilfe eines Walles 18 gestauten Abfluß 1 einer Fischzuchtanstalt wurden 33 Behälter 14 (im folgenden als Filtereinheiten bezeichnet) in der in Fig. 1 wiedergegebenen Form angeschlossen. Jede Filtereinheit 14 wurde mit körniger Aktivtonerde 4 mit einer Korngröße zwischen 1 und 3 mm gefüllt. Die Filtereinheiten 14 wiesen jeweils eine freie Oberfläche für den Zulauf des Fließgewässers 1 von 0,7 $m^2$ auf. Die Füllhöhe, d. h. die Höhe des Schüttkörpers 3 aus Aktivtonerde 4, betrug 1 m. Der Abfluß 1 der Fischzuchtanstalt hatte eine Wasserführung von 25 000 l/h.

Das zu reinigende Wasser 1 strömte gleichmäßig durch die 33 Filtereinheiten 14, da diese in dem vorliegenden Falle ca. 20 cm unter der Wasseroberfläche parallel angeordnet waren. Das Ziel der Reduzierung der Orthophosphationen-Konzentration im Abfluß der Fischzuchtanstalt von im Mittel 300 Mikrogramm P/l auf maximal 50 Mikrogramm P/l konnte laufend über eine Zeitdauer von mehr als einem Jahr erreicht werden. Die auf alle aufgestellten Filtereinheiten 14 verteilte Aktivtonerdemasse von 19 800 kg war hierzu ausreichend. Der Durchsatz des Fließgewässers 1 durch die Filtereinheiten 14 betrug 1 m/h. In Abhängigkeit von der Korngröße des Sorptionsmaterials kann die Filtergeschwindigkeit verändert werden, darf jedoch 2 m/h nicht übersteigen.

Zur Aufrechterhaltung eines reibungslosen Betriebes mußten die Filtereinheiten 14 durchschnittlich nur einmal pro Monat rückgespült werden. Hierzu war eine Rückspülgeschwindigkeit von ca. 80 m/h und eine Spüldauer von ca. 10 Minuten erforderlich. Das hierzu benötigte Spülwasser wurde aus dem Fischteich entnommen und der Ablauf mit dem freigespülten Filterschlamm in die Wassermasse des gestauten Abflusses 1 überführt. Eine Beeinträchtigung des erfindungsgemäßen Verfahrens durch den rückgespülten Filterschlamm erfolgt deshalb nicht, weil dieser Rückspülschlamm sehr schnell sedimentiert. Im Rahmen der normalen Fischteichreinigung, die alljährlich geschieht, wird auch der Stauraum des Abflusses 1 gesäubert. Das Verfahren und der Betrieb der Vorrichtung verlief sowohl im Winterzeitraum bei Eisbedeckung des zu reinigenden Fließgewässers 1 als auch im Sommerzeitraum bei starkem Algenbewuchs störungsfrei.

Die Regelung der Ableitung des gereinigten Wassers 11 durch den Sammelraum 9 und die Rohrleitung 10, die durch den Wall 18 geführt ist, erfolgte in einfacher Weise über den verstellbaren Schwanenhalsauslauf 17, je nach dessen Stellung zur Achse der Rohrleitung 10. Selbstverständlich muß der Schwanenhalsauslauf 17 zur Ableitung des gereinigten Wassers 11 immer unterhalb des Wasserzulaufs 5 gestellt sein.

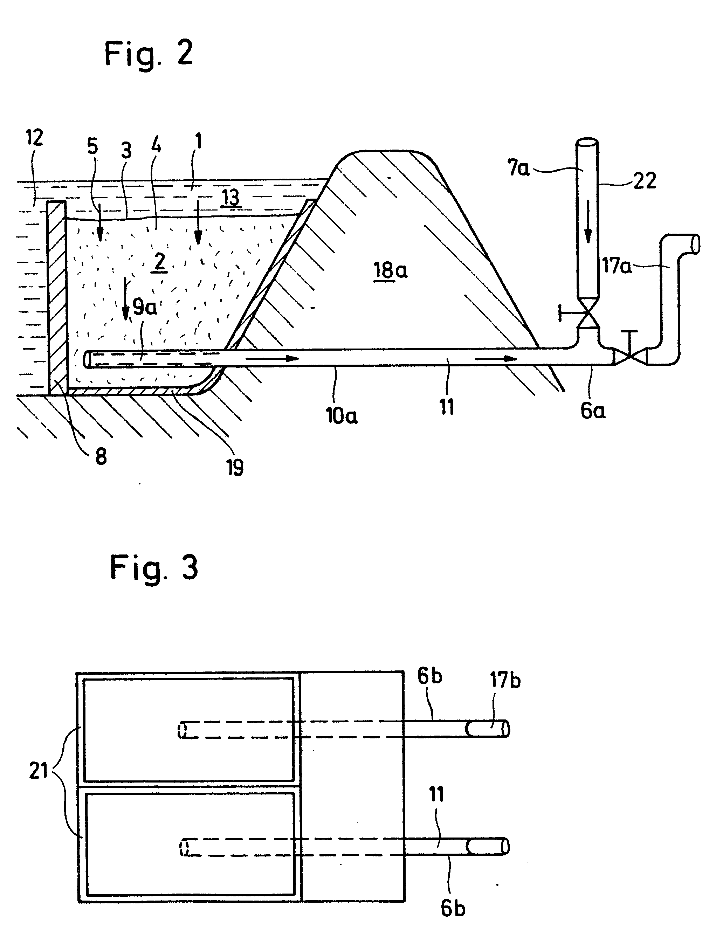

In Fig. 2 wird eine Vorrichtung gezeigt, die aus festen Bauteilen besteht (die beispielsweise aus vorgefertigten transportierbaren Fertigbetonteilen erstellt wurde) und einen Teil 13 eines Teiches 12 von diesem abtrennt. Innerhalb dieses durch eine Mauer 8 und einen Wall 18a abgetrennten Raumes 2 ist die gesamte erforderliche Menge des Reinigungsmaterials 4 als Schüttkörper 3 angeordnet. Der Schüttkörper 3 befindet sich unterhalb des Wasserspiegels des Zuflusses 1 bzw. des Teiches 12. Nach Durchströmen des Reinigungsmaterials 4 wird aus dem unteren Teil des Schüttkörpers 3 mit Hilfe eines beispielsweise geschlitzten Filterrohres 9a das gereinigte Wasser 11 abgezogen und durch eine Rohrleitung 10a, die durch den Wall 18a geführt ist, geleitet und durch einen verstellbaren Auslauf 17a abgegeben. Die Auslaufregelung kann auch hier, wie bereits beschrieben, durch einen Schwanenhalsauslauf erfolgen. Um eine unerwünschte Filtration durch den Wall oder den Boden des Teiches zu vermeiden, wird der Raum 2 durch eine Abdichtung 19, die beispielsweise aus einem Kunststoff bestehen kann, abgedichtet. Bei dieser Ausführung der erfindungsgemäßen Vorrichtung kann das Reinigungsmaterial 4 über eine Zufuhrleitung 22 für das Rückspülwasser, die mit der Sammelleitung 9a, 10a verbunden ist, rückgespült werden.

Fig. 3 zeigt einen Teil der erfindungsgemäßen Vorrichtung, nämlich den durch Zwischenwände in einzelne Kompartimente 21 unterteilten Raum 2, in dem sich das gekörnte Sorptionsmaterial 4 befindet. Die Kompartimente 21 sind getrennt rückspülbar über die Rohrleitungen 6b. Außerdem können die einzelnen Kompartimente getrennt voneinander vom gekörnten Sorptionsmittel 4 entleert werden. Alle in Fig. 3 nicht gezeigten Vorrichtungsteile entsprechen denen der Fig. 2.

**Patentansprüche**

1. Verfahren zur Entfernung bzw. Teilentfernung von in einem ein Gefälle aufweisenden Teichauslauf oder einem anderen natürlichen Fließgewässer enthaltenen störenden, gelösten Inhaltsstoffen, dadurch gekennzeichnet, daß das Wasser ausschließlich unter Ausnutzung seines Gefälles ohne Zufuhr von Fremdenergie mindestens einmal über einen unterhalb der Gewässeroberfläche angeordneten Schüttkörper aus gekörntem, die störenden, gelösten Inhaltsstoffe zurückhaltendem Sorptionsmaterial geleitet wird.

2. Verfahren zum Verhindern bzw. Stoppen von Eutrophierungsprozessen in Teichanlagen oder in natürlichen Fließgewässern, die Eutrophierung verursachende Inhaltsstoffe mit sich führen, dadurch gekennzeichnet, daß das Wasser ausschließlich unter Ausnutzung seines Gefälles ohne Zufuhr von Fremdenergie mindestens einmal über einen unterhalb der Gewässeroberfläche angeordneten Schüttkörper aus gekörntem, die Eutrophierung verursachenden Phosphor- und Stickstoffverbindungen aufnehmendem Sorptionsmaterial geleitet wird.

3. Verfahren nach Anspruch 1 oder 2, dadurch gekennzeichnet, daß das Fließgewässer mit einem Überstau von wenigstens 15 cm Wasserschichtdicke über der wirksamen Schüttkörper-Oberfläche auf diese geleitet wird, das Fließgewässer das Sorptionsmaterial durchströmt, wobei die störenden Inhaltsstoffe auf bzw. im Schüttkörper zurückbleiben, und das gereinigte Wasser unterhalb der Wasseroberfläche des Überstaus abgeleitet wird.

4. Verfahren nach einem der voranstehenden Ansprüche, dadurch gekennzeichnet, daß als Sorptionsmaterial Aktivtonerde mit einer geeigneten Korngröße im Bereich von 1 bis 3 mm verwendet wird.

5. Verfahren nach Anspruch 1 oder 2, dadurch gekennzeichnet, daß das Fließgewässer über mehrere nebeneinander liegende Schüttkörper geleitet wird.

6. Verfahren nach Anspruch 1 oder 2, dadurch gekennzeichnet, daß das Fließgewässer kaskadenartig über mehrere Schüttkörper geleitet wird.

7. Vorrichtung zur Durchführung des Verfahrens nach Anspruch 1 oder 2, gekennzeichnet durch mindestens einen nach unten und seitlich begrenzten, einen Schüttkörper (3) aus gekörntem, gelöste Stoffe aus der Gruppe Farbstoffe, Phosphor- und Stickstoffverbindungen zurückhaltendem Sorptionsmaterial (4) enthaltenden Raum (2) unterhalb der Wasser-Oberfläche eines Teichauslaufes oder eines anderen natürlichen Fließgewässers mit einem Zulauf (5) für das von den störenden, gelösten Inhaltsstoffen zu reinigende Wasser der Teichanlage oder des natürlichen Fließgewässers (1) oberhalb des Schüttkörpers (3), mit Mitteln (6, 6a, 6b) für das Ableiten des den Schüttkörper durchströmten gereinigten Wassers (11) unterhalb des Zulauf-Niveaus und mit Mitteln (7, 7a) zum Rückspülen des mit den störenden Stoffen beladenen Sorptionsmaterials (4).

8. Vorrichtung nach Anspruch 7, dadurch gekennzeichnet, daß der einen Schüttkörper enthaltende Raum (2) aus einem Teil (13) eines Teiches (12) gebildet wird und die seitliche Abgrenzung (8) aus einem Wall, aus einer Mauer oder aus einem Wehr besteht.

9. Vorrichtung nach Anspruch 7, dadurch gekennzeichnet, daß der einen Schüttkörper (3) enthaltende Raum (2) aus dem Innenraum (20) eines Behälters (14) oder einer Wanne gebildet wird und die Abgrenzung aus der Behälterwand (16) oder aus der Wannenwand besteht.

10. Vorrichtung nach Anspruch 7, dadurch gekennzeichnet, daß sowohl der Zulauf (5) als auch die Mittel (6, 6a, 6b) für das Ableiten des gereinigten Wassers frei von Fremdenergie-Zuleitungen ausgebildet sind.

11. Vorrichtung nach Anspruch 7, dadurch gekennzeichnet, daß die Schüttkörper (3) wenigstens 15 cm unterhalb der Wasseroberfläche (1) im Zulauf (5) angeordnet sind.

12. Vorrichtung nach Anspruch 7, dadurch gekennzeichnet, daß die Mittel (6, 6a, 6b) für das Ableiten des gereinigten Wassers jeweils im wesentlichen aus einem gegen die Sorptionsmittel-Teilchen undurchlässigen, lediglich für das gereinigte Wasser durchlässigen Sammelraum oder aus einer anderen geeigneten Ableitvorrichtung (9, 9a), unterhalb des Schüttkörpers (3) oder seitlich des unteren Teiles des Schüttkörpers angeordnet, und einer Rohrleitung (10, 10a) mit einem in seiner Höhe verstellbaren Auslauf (17, 17a, 17b) bestehen.

13. Vorrichtung nach Anspruch 12, dadurch gekennzeichnet, daß der Sammelraum (9) durch einen mit einem geeigneten Sieb bedeckten Filterboden gegen die Sorptionsmittelteilchen begrenzt ist.

14. Vorrichtung nach Anspruch 12, dadurch gekennzeichnet, daß die Ableitvorrichtung (9a) ein Filterrohr ist.

15. Vorrichtung nach Anspruch 12, dadurch gekennzeichnet, daß die Rohrleitung (10, 10a) durch eine das Fließgewässer (1) stauende Befestigung (18) oder durch einen den Raum (2) nach außen begrenzenden Wall (18a) geführt ist.

16. Vorrichtung nach Anspruch 12, dadurch gekennzeichnet, daß die Rohrleitung (10) vom Filterelement (9) aus zunächst an der Behälterwand (16) oder Wannenwand nach oben und danach abbiegend durch die Befestigung (18) oder durch den Wall (18a) geführt ist.

17. Vorrichtung nach Anspruch 12, dadurch gekennzeichnet, daß der Auslauf (17, 17a, 17b) der Rohrleitung (10, 10a) als um die Achse der Rohrleitung schwenkbarer Schwanenhals ausgebildet ist.

18. Vorrichtung nach Anspruch 7, gekennzeichnet durch mehrere parallel geschaltete, nach unten und seitlich begrenzte, Schüttkörper (3) enthaltende Räume (2).

19. Vorrichtung nach Anspruch 7, gekennzeichnet durch mehrere hintereinander und in absteigender Reihe geschaltete, nach unten und seitlich begrenzte, Schüttkörper (3) enthaltende Räume (2).

## Claims

1. Process for removal or partial removal from an inclined pond outlet or other natural flowing waters of disturbing substances dissolved therein, wherein the water is passed atleast once by its gravity, without supply of external energy, over a packed bed made of granular sorption material retaining the disturbing dissolved substances and placed below the water surface.

2. Process for inhibiting or stopping eutrophication processes in ponds or in natural flowing waters carrying substances causing eutrophication, wherein the water is passed at least once by exclusive exploitation of its gravity, without supply of external energy, over a packed bed made of granular sorption material and placed below the water surface absorbing the phosphoros and nitrogen compounds causing eutrophication.

3. Process as defined in claim 1 or 2 wherein the flowing waters are passed to the effective packed bed surface and impounded in such a way that a water layer of at least 15 cm thickness overlies it, the flowing waters pass through the sorption material while the disturbing substances contained in them are left on and in the packed bed, respectively, and the cleaned water is discharged below the surface of the impounded water.

4. Prozess as defined in one of the preceding claims wherein activated alumina with an appropriate grain size of 1 to 3 mm is used as the sorption material.

5. Process as defined in claim 1 or 2 wherein the flowing waters are passed over several packed beds lying side by side.

6. Process as defined in claim 1 or 2 wherein the flowing waters are passed over several packed beds arranged similar to a cascade.

7. Device for implementation of the process as defined in claim 1 or 2 with at least one space (2) limited downwards and sidewards and containing a packed bed (3) made of granular sorption material (4) retaining dissolved substances of the dyes, phosphoros and nitrogen compounds group, provided below the water surface of a pond outlet or other natural flowing waters with an inlet (5) for the water of the pond system or the natural flowing waters (1) to be cleaned from the disturbing dissolved substances contained provided above the packed bed (3), with means (6, 6a, 6b) for discharging the cleaned water (11) below the inlet level of passage through the packed beds and with means (7, 7a) for reflushing the sorption material (4) loaden with the disturbing substances.

8. Device as defined in claim 7 wherein the space (2) containing a packed bed is made up of a part (13) of a pond (12) and the side limitation (8) of a dam, a wall or a weir.

9. Device as defined in claim 7 wherein the space (2) containing a packed bed (3) is made up of the internal volume (20) of a vessel (14) or a trough and the limitation is made up of the vessel wall (16) or the trough wall.

10. Device as defined in claim 7 wherein both the inlet (5) and the means (6, 6a, 6b) for discharging the cleaned water are designed so as to be free from external energy supplies.

11. Device as defined in claim 7 wherein the packed beds (3) are provided at least 15 cm below the water surface (1) in the inlet (5).

12. Device as defined in claim 7 wherein the means (6, 6a, 6b) for discharging the cleaned water consist each essentially of a receiver or another appropriate discharge system (9, 9a) provided below the packed bed (3) or beside the lower part of the bulk body, impermeable to the particles of the sorption material and permeable exclusively by the cleaned water, and a pipework (10, 10a) with an outlet adjustable in height (17, 17a, 17b).

13. Device as defined in claim 12 wherein the receiver (9) is limited with respect to the sorption material particles by a filter bottom covered with an appropriate sieve.

14. Device as defined in claim 12 wherein the discharge system (9a) is a filter tube.

15. Device as defined in claim 12 wherein the pipework (10, 10a) is routed through a lining (18) impounding the flowing waters (1) or through a dam (18a) limiting the space (2) to the outside.

16. Device as defined in claim 12 wherein the pipework (10) is initially routed upwards from the filter element (9) along the vessel wall (16) or trough wall and then turned to penetrate the lining (18) or the dam (18a).

17. Device as defined in claim 12 wherein the outlet (17, 17a, 17b) of the pipework (10, 10a) is made as a goose neck tiltable around the axis of the pipework.

18. Device as defined in claim 7 with several spaces (2) in parallel with downwards and sidewards limitations and containing packed beds (3).

19. Device as defined in claim 7 with several spaces (2) in series and connected in decreasing order with downwards and sidewards limitations and containing packed beds (3).


### Revendications

1. Procédé pour l'élimination ou l'élimination partielle des matières gênantes dissoutes dans un émissaire d'une pièce d'eau présentant une chute ou dans une autre eau courante naturelle, caractérisé par le fait que l'eau est conduite, sans apport d'énergie externe, exclusivement par la mise à profit de la pente, au moins une fois sur un lit filtrant disposé au-dessous de la surface du cours d'eau, fait d'un matériau absorbant granulé qui retient les matières gênantes dissoutes.

2. Procédé pour inhiber ou stopper les processus d'eutrophisation dans des plans d'eau ou des eaux courantes naturelles qui transportent des substances provoquant cette eutrophisation, caractérisé par le fait que l'eau est envoyée exclusivement par mise à profit de sa pente, sans apport d'énergie externe, au moins, une fois sur un lit filtrant disposé au-dessous de la surface du cours d'eau, fait d'un matériau granulé absorbant qui retient les composés phosphorés et azotés responsables de l'eutrophisation.

3. Procédé selon l'une des revendications 1 ou 2, caractérisé par le fait que l'eau courante recouvrant d'une couche d'eau égale au moins à 15 cm la surface du lit actif, est conduite sur celui-ci, que l'eau courante passe sur le matériau absorbant, ce qui fait que les matières gênantes sont respectivement retenues dans le lit filtrant, et que l'eau épurée est évacuée en dessous de la surface de la retenue de l'eau.

4. Procédé selon l'une des revendications précédentes, caractérisé par le fait que l'on utilise, en tant que matériau absorbant, une argile activée ayant une grosseur de grains de l'ordre de 1 à 3 mm.

5. Procédé selon l'une des revendications 1 ou 2, caractérisé par le fait que l'eau courante est conduite sur plusieurs lits filtrants placés les uns à côté des autres.

6. Procédé selon l'une des revendications 1 ou 2, caractérisé par le fait que l'eau courante passe les cascades sur plusieurs lits filtrants.

7. Dispositif pour l'exécution du procédé selon l'une des revendications 1 ou 2, caractérisé en ce qu'il est constitué d'au moins un espace (2) délimité vers le bas et latéralement, contenant un lit (3) fait de matériau absorbant (4) retenant les substances dissoutes qui appartiennent au groupe des colorants, des composés phosphorés et azotés, se trouvant au-dessous de la surface de l'eau de l'émissaire d'une pièce d'eau ou d'une autre eau courante naturelle, ayant, au-dessus du lit filtrant (3), une arrivée (5) pour épurer l'eau de la pièce d'eau ou de cours d'eau naturel (1) des souillures dissoutes, avec des systèmes (6, 6a, 6b) pour l'évacuation de l'eau épurée (11) qui est passée dans le lit qui se trouve au-dessous du niveau d'arrivée, et avec des systèmes (7, 7a) pour laver à contre-courant le matériau absorbant (4) chargé des matières gênantes.

8. Dispositif selon la revendication 7, caractérisé par le fait que l'espace (2) contenant le lit de grains en vrac est fait d'une partie (13) d'une pièce d'eau (12) et que la délimitation latérale (8) est constituée d'un talus, d'un mur ou d'un barrage.

9. Dispositif selon la revendication 7, caractérisé par le fait que l'espace (2) contenant le lit (3) est formé de la partie interne (20) d'un réservoir (14) ou d'une cuve et que la délimitation est constituée par la paroi du réservoir (16) ou de la cuve.

10. Dispositif selon la revendication 7, caractérisé par le fait que, aussi bien l'arrivée (5) que les systèmes (6, 6a, 6b) pour l'évacuation de l'eau épurée sont réalisés libres d'apport d'énergie externe.

11. Dispositif selon la revendication 7, caractérisé par le fait que les lits de granulés (3) sont disposés au moins 15 cm en-dessous de la surface de l'eau (1) à l'arrivée (5).

12. Dispositif selon la revendication 7, caractérisé par le fait que les systèmes (6, 6a, 6b) pour l'évacuation de l'eau épurée consistent essentiellement chacun en un collecteur laissant passer uniquement l'eau épurée et ne laissant pas passer les particules d'agent absorbant, ou en un autre dispositif d'évacuation (9, 9a) disposé en-dessous du lit (3) ou à côté de la partie inférieure de ce lit, et en une canalisation (10, 10a) ayant un conduit de sortie (17, 17a, 17b) réglable dans sa hauteur.

13. Dispositif selon la revendication 12, caractérisé par le fait que le collecteur (9) est limité par un fond de filtre pourvu d'un tamis approprié pour retenir les particules d'agent absorbant.

14. Dispositif selon la revendication 12, caractérisé par le fait que le dispositif d'évacuation (9a) est un tuyau-filtre.

15. Dispositif selon la revendication 12, caractérisé par le fait que la canalisation (10, 10a) est amenée au travers d'une ligne de retenue (18) des eaux courantes (1) ou au travers d'un remblai (18a) limitant l'espace (2) vers l'intérieur.

16. Dispositif selon la revendication 12, caractérisé par le fait que la canalisation (10) va d'abord de l'élément filtrant (9) à la paroi du réservoir (16) ou de la cuve vers le haut, et traverse ensuite la digue (18) ou le talus (18a).

17. Dispositif selon la revendication 12, caractérisé par le fait que la sortie (17, 17a, 17b) de la canalisation (10, 10a) est formée d'un col de cygne orientable sur l'axe de la canalisation.

18. Dispositif selon la revendication 7, caractérisé par plusieurs espaces (2) contenant des granulés en vrac (3) montés en parallèle, délimités vers le bas et latéralement.

19. Dispositif selon la revendication 7, caractérisé par plusieurs espaces (2) contenant des lits filtrants (3) disposés les uns derrière les autres et en rangée descendante, délimitée par dessous et latéralement.

# Fig. 1

# Fig. 2

# Fig. 3